Europäisches Patentamt

(19) European Patent Office

Office européen des brevets

(11) Numéro de publication: **0 215 686**
**B1**

(12) **FASCICULE DE BREVET EUROPEEN**

(45) Date de publication du fascicule du brevet:
24.05.89

(21) Numéro de dépôt: 86401245.5

(22) Date de dépôt: 10.06.86

(51) Int. Cl.⁴: **B 60 C 27/10, B 60 C 27/04**

(54) **Dispositif antidérapant amovible pour roues à pneumatique de véhicules.**

(30) Priorité: **18.07.85 FR 8511145**

(43) Date de publication de la demande:
**25.03.87 Bulletin 87/13**

(45) Mention de la délivrance du brevet:
**24.05.89 Bulletin 89/21**

(84) Etats contractants désignés:
**AT BE CH DE GB IT LI LU NL SE**

(56) Documents cités:
**FR-A- 2 197 125**
**FR-A- 2 253 641**
**US-A- 2 754 874**
**US-A- 3 601 173**

(73) Titulaire: **Cizaire, Yvan, Chemin du Mourion Haut,
F-30400 Villeneuve-Les-Avignon (FR)**

(72) Inventeur: **Cizaire, Yvan, Chemin du Mourion Haut,
F-30400 Villeneuve-Les-Avignon (FR)**

(74) Mandataire: **Bugnon-Hays, Claudine, PATCO
S.A. 39 Boulevard René Cassin B.P. 4, F-84170 Monteux
(FR)**

## Description

La présente invention concerne un dispositif antidérapant amovible, destiné à être monté sur le pneumatique de la roue d'un véhicule et du type comprenant un support portant une série d'éléments antidérapants s'étendant transversalement au-dessus de la bande de roulement du pneumatique et au moins un vérin pneumatique muni de moyens pour son alimentation à partir de la valve d'air du pneumatique et qui permet d'appliquer les éléments antidérapants sur la bande de roulement du pneumatique.

De tels dispositifs sont connus et par exemple décrits dans le brevet français FR-A 2 464 835. Dans le dispositif décrit dans ce brevet, le support est constitué par plusieurs paires de tiges rayonnantes (figure 8) dont chaque tige porte par son extrémité extérieure, un élément antidérapant. Les extrémités intérieures des tiges de chaque paire sont reliées à des pièces de liaison ou ailes qui les relient simultanément à deux vérins d'un ensemble de vérins disposés par exemple en triangle. Ces vérins sont actionnés par l'air comprimé du pneumatique et reliés à la valve d'air de celui-ci par un tuyau souple.

Un tel dispositif présente deux inconvénients majeurs qui ont empêché son utilisation dans la pratique. D'abord l'ensemble des éléments de ce dispositif ne forme pas une structure rigide et sa mise en place sur un pneumatique sur le véhicule sans démontage est long et malaisé et nécessite le plus souvent l'intervention de deux personnes. La mise en place régulière des tiges rayonnantes s'avère dans la pratique très difficile sinon impossible. D'autre part, les éléments antidérapants ont tendance lors du déplacement du véhicule à glisser sur la bande de roulement du pneumatique. Ceci se traduit par une perturbation de la structure régulière du dispositif et très souvent par la rupture du tuyau souple reliant les vérins à la valve d'air du pneumatique et ainsi par un détachement complet du dispositif.

L'invention a pour objet de concevoir un dispositif dudit type permettant de remédier aux deux dits inconvénients des dispositifs connus.

Dans le dispositif suivant la présente invention, ledit support est constitué par un anneau dont le diamètre est légèrement inférieure à celui du pneumatique et sur lequel sont montés pivotants les éléments antidérapants, l'anneau comportant un moyeu maintenu par une série de rayons et qui comporte une chambre de distribution d'air comprimé dont l'orifice d'admission est relié par un raccord tournant et par un tuyau souple à la valve d'admission du pneumatique tandis que les orifices de sortie sont reliés aux vérins de commande des éléments antidérapants qui sont disposés entre ledit moyeu et les éléments antidérapants.

On obtient ainsi une structure rigide dans laquelle les éléments antidérapants sont maintenus parfaitement dans leurs positions relatives au cours du déplacement du véhicule. Un tel dispositif peut être mis en place sur la roue d'une manière simple et rapide par une seule personne et sans déplacement du véhicule. Grâce au raccord tournant, on ne risque plus l'arrachement du tuyau de raccordement de la valve d'air du pneumatique lors d'un glissement des éléments antidérapants sur ce dernier.

Suivant un mode de réalisation préféré du dispositif selon l'invention, le dispositif comporte pour chaque élément antidérapant un vérin de commande individuel s'étendant radialement entre le moyeu et l'élément antidérapant correspondant.

Une telle structure est particulièrement simple et comporte un très petit nombre de pièces mobiles sensibles aux intempéries auxquelles est exposé un dispositif de ce type lors de son utilisation en hiver.

Suivant une première variante de l'invention, les vérins exercent une traction sur les éléments antidérapants pour les appliquer sur la bande de roulement du pneumatique.

Suivant une autre variante de l'invention, les vérins exercent une pression sur les éléments antidérapants pour les appliquer sur la bande de roulement du pneumatique.

Suivant un mode de réalisation particulièrement simple et avantageux du dispositif selon l'invention, ledit anneau est constitué par un élément tubulaire et les éléments antidérapants présentent une partie tubulaire engagée directement sur ledit anneau, des moyens étant prévus pour empêcher tout coulissement des éléments antidérapants par rapport audit anneau.

D'autres réalisations et avantages de l'invention ressortiront de la description qui va suivre et en se référant aux dessins annexés montrant à titre d'exemple non limitatif des vues en perspective de deux modes de réalisation préférés du dispositif selon l'invention.

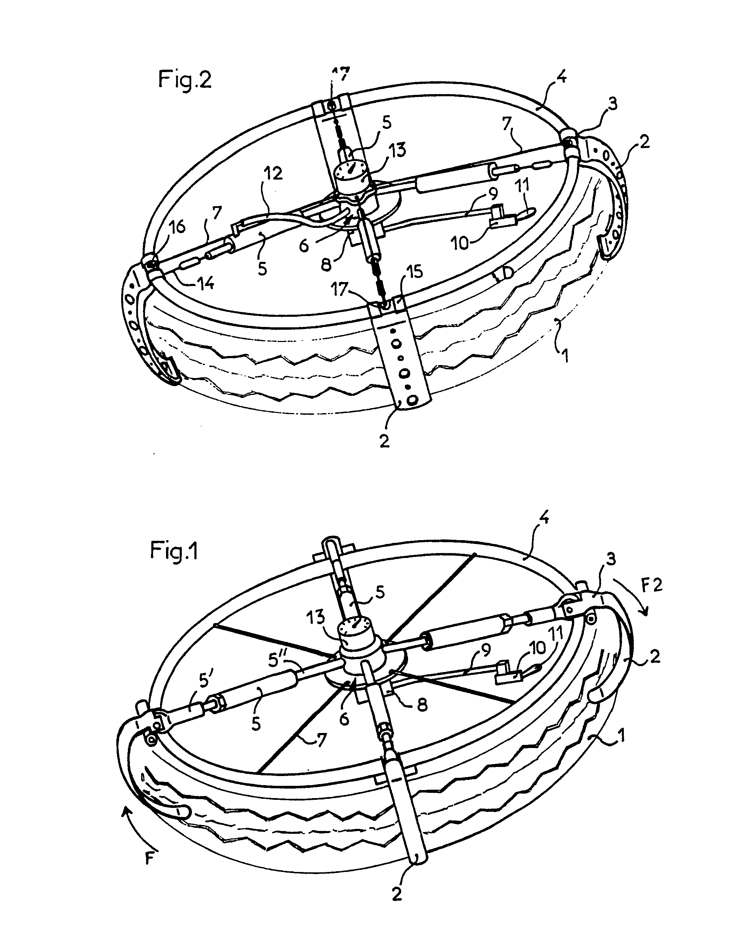

A la figure 1, on voit un pneumatique (1) d'une roue d'un véhicule équipé d'un dispositif selon l'invention. Ce dispositif comporte quatre éléments antidérapants (2) destinés à être appliqués en position de service transversalement sur la bande de roulement du pneumatique (1). Ces quatre éléments antidérapants sont espacés régulièrement sur la circonférence du pneumatique (1) et chaque élément (2) est constitué d'une pièce recourbée dont la surface intérieure épouse parfaitement la bande de roulement du pneumatique (1) et comporte des moyens d'accrochage. L'une des extrémités de chaque élément antidérapant (2) est reliée par une articulation (3) sur anneau de support (4) dont le diamètre est légèrement inférieur à celui de la roue à équiper. De cette manière, les éléments (2) peuvent être pivotés autour d'un axe tangential entre une position de repos dans laquelle ils sont dégagés du pneumatique (1) et une position de service dans laquelle ils sont appliqués et serrés sur la bande de roulement du pneumatique (1). Ce pivotement de chaque élément (2) entre sa position de repos et sa position de service est commandé par un vérin pneumatique (5) disposé radialement entre l'extrémité intérieure de chaque élément (2) et un moyeu central (6) qui est également relié à l'anneau (4) par des rayons fixes (7). La tige de chaque vérin (5) est reliée par une articulation (5') à l'extrémité intérieure de l'élément antidérapant correspondant tandis que le cylindre de chaque vérin (5) est relié par une tige (5'') au moyeu central (6). Le moyeu (6) est creux et forme une chambre de distribution pneumatique (non représentée ici) dont l'orifice d'arrivée d'air comprimé est relié par un raccord tournant (8) à un tuyau souple (9) dont l'autre extrémité porte un raccord (10) destiné à être engagé d'une manière amovible sur la valve d'air (11) du pneumatique (1). L'orifice d'arrivée d'air comprimé de chaque vérin (5) est relié par la tige (5'') à un orifice de sortie d'air comprimé de la chambre de distribution formée par le moyeu (6). Dans le mode de réalisation représenté ici, le moyeu (6) porte un manomètre (13) indiquant la pression d'air dans la chambre de distribution formée par la moyeu (6).

En repos, les tiges des vérins (5) sont rétractées et les éléments antidérapants (2) sont pivotés dans le sens de la flèche (F) dans leur position de repos. On peut alors engager le dispositif selon l'invention dans une direction latérale sur la roue d'un véhicule. Cette opération est simple et peut être effectuée par une seule personne sans déplacement du véhicule. Lorsque le dispositif est mis en place sur la roue, on branche le raccord (10) sur la valve d'air (11) du pneumatique (1). L'air comprimé s'écoule à travers le tuyau souple (9), le raccord tournant (8), la chambre de distribution formée par le moyeu (6) dans le cylindre de chaque vérin (5). La tige de chaque vérin (5) est poussée radialement vers l'extérieur et fait pivoter l'élément antidérapant correspondant (2) dans le sens de la flèche (F2) dans sa position de service dans laquelle il est étroitement appliqué sur la bande de roulement du pneumatique (1) et maintient le dispositif sur la roue du véhicule.

Le mode de réalisation représenté à la fig. 2 est très similaire à celui représenté à la fig. 1. Le dispositif selon l'invention représenté à cette figure comporte à nouveau quatre éléments antidérapants (2) montés pivotants sur un anneau (4) et dont le pivotement est commandé par un vérin pneumatique (5) s'étendant radialement entre chaque élément (2) et un moyeu central (6) maintenu par des rayons (7). Ce moyeu (6) est de nouveau creux et forme une chambre de distribution d'air dont l'orifice d'arrivée d'air est relié à travers un raccord tournant (8) à un tuyau souple (9) dont l'extrémité opposée porte un raccord (10) destiné à être engagé sur la valve d'air (11) du pneumatique de la roue d'un véhicule. Les vérins (5) sont alimentés en air comprimé par des tuyaux souples (12) reliés à la chambre de distribution formée par le moyeu creux (6). Mais dans ce mode de réalisation, les vérins (5) travaillent par traction. A cet effet, l'extrémité libre de la tige de chaque vérin (5) est reliée par un câble (14), de préférence du type à têtes, à l'élément (2) correspondant. Chaque élément antidérapant (2) comporte à son extrémité intérieure une partie tubulaire (15) engagée directement sur l'anneau (4) pour permettre un pivotement de l'élément autour de l'anneau (4). Ces éléments (2) sont maintenus sur l'anneau (4) par des doigts de positionnement (16) engagés dans des fentes allongées (17) prévues dans les parties tubulaires des éléments (2). Cette structure est plus simple et moins coûteuse que celle représentée à la fig. 1.

On notera en particulier que les rayons (17) reliant le moyeu (6) à l'anneau (4) sont de préférence au niveau des vérins (5) pour faciliter la manipulation du dispositif selon l'invention. Sur les dessins annexés, on a représenté les rayons dans des positions décalées pour des raisons de clarté des vues.

Les éléments antidérapants sont réalisés en une matière particulièrement dure et résistante et notamment en acier trempé tandis que l'anneau (4) et le moyeu (6) peuvent être réalisée en alliage léger tel qu'un alliage d'aluminium ou encore en matière plastique pour alléger le dispositif selon la présente invention.

**Revendications**

1. Dispositif antidérapant amovible destiné à être monté sur le pneumatique de la roue d'un véhicule et du type comprenant un support portant une série d'éléments antidérapants s'étendant transversalement au-dessus de la bande de roulement du pneumatique et au moins un vérin pneumatique muni de moyens pour son alimentation à partir de la valve d'air du pneumatique et qui permet d'appliquer les éléments antidérapants sur la bande du pneumatique, caractérisé en ce que ledit support est constitué par un anneau (4) dont le diamètre est légèrement inférieur à celui du pneumatique (1) et sur lequel sont montés pivotants les éléments antidérapants (2), l'anneau (4) comportant un moyeu (6) maintenu par une série de rayons (7) et qui comporte une chambre de distribution d'air comprimé dont l'orifice d'admission est relié par un raccord tournant (8) et par un tuyau souple (9) à la valve d'admission (11) du pneumatique (1) tandis que les orifices de sortie sont reliés aux vérins de commande (5) des éléments antidérapants (2) qui sont disposés entre ledit moyeu (6) et les éléments antidérapants (2).

2. Dispositif suivant la revendication 1, caractérisé en ce qu'il comporte pour chaque élément antidérapant (2), un vérin de copmmande individuel (5) s'étendant radialement entre le moyeu (6) et l'élément antidérapant correspondant (2).

3. Dispositif suivant la revendication 2, caractérisé en ce que les vérins (5) exercent une traction sur les éléments antidérapants (2) pour les appliquer sur la bande de roulement du pneumatique (1).

4. Dispositif suivant la revendication 2, caractérisé en ce que les vérins (5) exercent une pression sur les éléments antidérapants pour les appliquer sur la bande de roulement du pneumatique (1).

5. Dispositif suivant l'une quelconque des revendications 1 à 4, caractérisé en ce que ledit anneau (4) est constitué par un élément tubulaire et les éléments antidérapants (2) présentent une partie tubulaire (15) engagé directement sur ledit anneau (4), des moyens étant prévus pour empêcher tout coulissement des éléments antidérapants (2) par rapport audit anneau (4).

**Patentansprüche**

1. Eine lösbare Gleitschutzvorrichtung, die für Montage an einem Reifen eines Fahrzeugrads be-

stimmt ist, in der Bauform, die einen Träger aufweist, welcher eine Pluralität von Gleitschutzgliedern trägt, die sich über und quer zur Reifenlauffläche erstrecken, und wenigstens einen Luftzylinder mit den Mitteln für Luftzufuhr aus dem Reifenluftventil, der es ermöglicht, die Gleitschutzglieder auf die Reifenlauffläche anzusetzen, damit gekennzeichnet, daß der Träger aus einem Ring (4) besteht, dessen Durchmesser ein wenig kleiner als der Durchmesser des Reifens (1) ist, und worauf die Gleitschutzglieder (2) drehbar montiert sind; der Ring (4) weist eine Nabe (6), die durch eine Pluralität von Speichen (7) befestigt ist, sowie eine Preßluftkammer aus, deren Einlaßöffnung mit dem Luftventil (11) des Reifens (1) durch einen Drehanschluß (8) und einen Schlauch (9) verbunden ist, indem die Auslaßöffnungen mit den Steuerzylindern (5) der Gleitschutzgliedern (2) verbunden sind, welche zwischen der Nabe (6) und den Gleitschutzgliedern (2) vorgesehen sind.

2. Eine Vorrichtung nach Anspruch 1, damit gekennzeichnet, daß sie für jeder Gleitschutzglied (2) einen individuellen Steuerzylinder (5) aufweist, welcher sich zwischen der Nabe (6) und dem entsprechenden Gleitschutzglied (2) radial erstreckt.

3. Eine Vorrichtung nach Anspruch 2, damit gekennzeichnet, daß die Zylinder (5) an den Gleitschutzgliedern (2) ziehen, um dieselben auf die Reifenlauffläche (1) anzusetzen.

4. Eine Vorrichtung nach Anspruch 2, damit gekennzeichnet, daß die Zylinder (5) auf die Gleitschutzglieder drücken um dieselben auf die Reifenlauffläche (1) anzusetzen.

5. Eine Vorrichtung nach den Ansprüchen 1 bis 4, damit gekennzeichnet, daß der Ring (4) ein Rohrglied ist und daß die Gleitschutzglieder (2) einen Rohrteil (15) aufweisen, der den Ring unmittelbar eingreift, indem Mittel vorgesehen sind, um das Gleiten der Gleitschutzglieder (2) in Verhältnis zum Ring (4) zu verhindern.

## Claims

1. A removable nonskid device, designed for mounting to the tire of a vehicle wheel, of the type comprising a support carrying a plurality of nonskid elements extending at right angles to and above the tire tread and at least one pneumatic cylinder provided with means to be supplied from the tire air valve and permitting to apply the nonskid elements onto the tire tread, characterized by the fact that said support consists of a ring (4), the diameter of which is slightly less than the tire (1) diameter and the nonskid elements (2) being pivotably mounted thereon, the ring (4) having a hub (6) held by a plurality of spokes (7) and that comprises a compressed air supply chamber, the inlet port of which is connected to the tire (1) inlet valve (11) via a rotating connection (8), and a hose (9), while the outlet ports are connected to the control cylinders (5) of the nonskid elements (2) which are inserted between said hub (6) and said nonskid elements (2).

2. A device according to claim 1, characterized by the fact that, for each nonskid element (2), it comprises an individual control cylinder (5) extending radially between the hub (6) and the respective nonskid element (2).

3. A device according to claim 2, characterized by the fact that cylinders (5) operate a traction on the nonskid elements (2), in order to apply them onto the tire (1) tread.

4. A device according to claim 2, characterized by the fact that cylinders (5) operate a pressure on the nonskid elements in order to apply them onto the tire (1) tread.

5. A device according to any claim 1 through 4, characterized by the fact that said ring (4) consists of a tubular part and the nonskid elements (2) have a tubular portion (15) directly engaging said ring (4), with means being provided in order to prevent any sliding of the nonskid elements (2) with respect to said ring (4).

Fig.2

Fig.1